# EUROPÄISCHE PATENTANMELDUNG

(11) **EP 1 310 146 A1**
(43) Veröffentlichungstag der Anmeldung: **14.05.2003**
(21) Anmeldenummer: 01126639.2
(22) Anmeldetag: 08.11.2001
(51) Int. Cl.: A01C 5/06, A01B 15/02

(54) **Mulchsaatsäeinheit**

(71) Anmelder: Rabe Agrarsysteme GmbH & Co. KG, 49152 Bad Essen (DE)
(72) Erfinder: Von Allwörden, Wilhelm, 01326 Dresden (DE)
(74) Vertreter: Missling, Arne, Dipl.-Ing.

(57) **Zusammenfassung**

Mulchsaatsäeinheiten mit mindestens einem Säarm (2), an dem zumindest ein mit einem Säschar (4) versehenes Särohr (5) befesigt ist, das mit einer Räumscheibe (3) zusammenwirkt, wobei das Säschar (4) eine Hartmetallbeschichtung (9) aufweist, hat, um die Einsatzdauer des Säschares wesentlich zu verlängern, auf der der Räumscheibe (3) gegenüberliegenden Seite des Säschares (4) zumindest eine die Scharspitze bildenden Hartmetallbeschichtung (9).

## Beschreibung

Die Erfindung betrifft eine Mulchsaatsäeinheit mit mindestens einem Säarm, an dem zumindest ein mit einem Säschar versehenes Särohr befestigt ist, das mit einer Räumscheibe zusammenwirkt, wobei das Säschar eine Hartmetallbeschichtung aufweist.

Säschare von Mulchsaatsäeinheiten sind dicht neben einer kalottenförmig ausgebildeten Räumscheibe angeordnet und arbeiten in deren Arbeitsschatten. Trotzdem sind diese Säschare einem sehr hohen Verschleiß ausgesetzt und müssen häufig erneuert werden. Bekannt ist es, um die Lebensdauer eines derartigen Säschares zu verlängern, die Spitze des Säschares mit einer Hartmetallbeschichtung zu versehen. Hierdurch wird zwar erreicht, dass die Einsatzdauer des Säschares verlängert wird, jedoch ist diese immer noch nicht befriedigend.

Der Erfindung liegt die Aufgabe zu Grunde, eine Mulchsaatsäeinheit der eingangs genannten Art so auszubilden, dass die Einsatzdauer des Säschares im Vergleich zu den bekannten Säscharen wesentlich verlängert wird.

Diese Aufgabe wird erfindungsgemäß dadurch gelöst, dass die der Räumscheibe gegenüberliegende Seite des Säschares zumindest teilweise mit einer die Scharspitze bildenden Hartmetallbeschichtung versehen ist.

Die Anbringung einer Hartmetallbeschichtung auf der der Räumscheibe gegenüberliegenden Seite des Säschares, welche bis zur Spitze des Säschares reicht und die Seite zumindest teilweise flächig überdeckt, hat zu einer wesentlichen Steigerung der Einsatzdauer der Säschare geführt. Dadurch, dass die seitliche Beschichtung bis zur Scharspitze reicht, wird der Verschleiß der Scharspitze durch die seitliche Beschichtung des Säschares wesentlich verringert. so dass dieses später ausgetauscht werden muss. Auf Grund der Anbringung der verschleißfesten Schicht auf der der Räumscheibe gegenüberliegenden Seite des Säschares wird darüber hinaus auch der seitliche Verschleiß des Säschares vermindert, der auf Grund der Stauwirkung im Bereich zwischen Säschar und Räumscheibe doch sehr beachtlich ist.

Ein Ausführungsbeispiel der Erfindung ist im Folgenden an Hand der Zeichnung näher beschrieben. In dieser zeigen
- Fig. 1: eine Seitenansicht einer erfindungsgemäß ausgebildeten Mulchsaatsäeinheit,
- Fig. 2: eine Stirnansicht auf das untere Ende des Särohres mit Säschar und mit teilweise weggebrochen dargestellter Räumscheibe,
- Fig. 3: eine Seitenansicht des Särohres mit dem Säschar,
- Fig. 4 und 5: zwei weitere Ausführungsformen der Anordnung der Hartmetallbeschichtung an der Seitenfläche des Säschares,
- Fig. 6: einen Schnitt nach Linie A-A in Fig. 3 und
- Fig. 7: einen Schnitt entsprechend Fig. 6 durch eine weitere Ausführungsform gemäß der Erfindung.

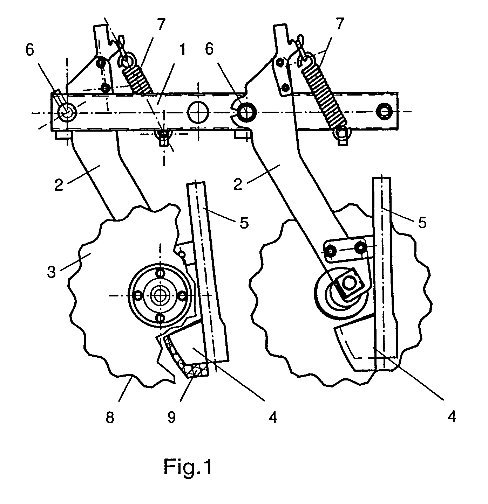

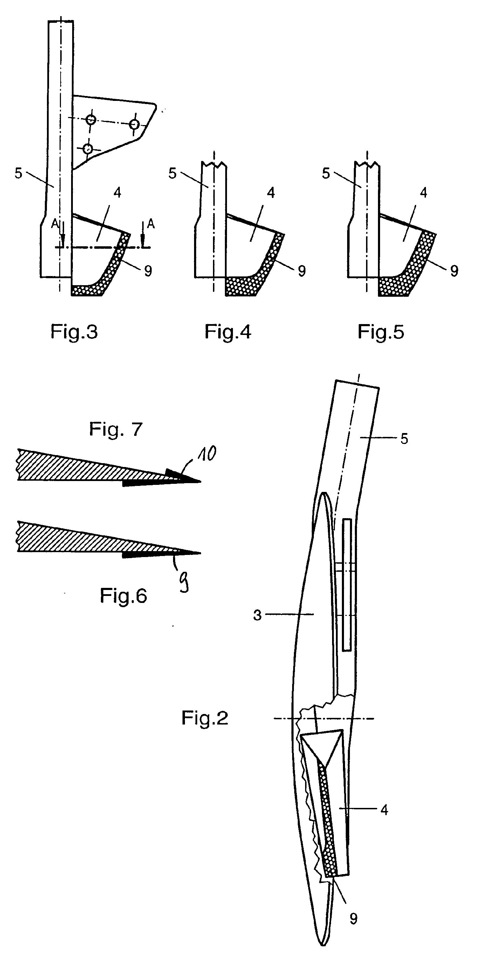

In Fig. 1, die eine Seitenansicht einer Mulchsaatsäeinheit zeigt, bezeichnet 1 den Rahmen, an dem Säarme 2 schwenkbar befestigt sind, an welchen jeweils eine Räumscheibe 3 und ein ein Säschar 4 tragendes Särohr 5 befestigt sind. Die Räumscheibe 3 ist, wie dies auch Fig. 2 zeigt, kalottenförmig ausgebildet, so dass das Säschar 4 im Arbeitsschatten der Räumscheibe 3 durch den Boden gezogen wird.

Der Säarm 2 ist über ein Gelenk 6 am Rahmen 1 angeschlossen und wird über eine Feder 7 in seiner Arbeitsstellung gehalten. Trifft die Räumscheibe 3 oder das Säschar 4 auf ein festes Hindernis, so kann der Säarm 2 nach oben wegschwenken, ohne dass die Arbeitsstellungen der übrigen Säschare hierdurch beeinträchtigt wird. Nach Überschreiten des Hindernisses bringt die Feder 7 die Räumscheibe 3 und das Säschar 4 wieder in Arbeitsposition.

Auf der der Räumscheibe 3 zugewandten Seite 8 des Säschares 4 ist eine Hartmetallbeschichtung 9 aufgebracht, welche gleichzeitig die Spitze des Säschares 4 bildet. Diese reicht im unteren und oberen Bereich bis zum Ende des Säschares 4. Vorteilhaft kann die gesamte Seite des Säschares 4 beschichtet sein, so dass der Verschleiß, welcher durch erhöhte Reibung zwischen Räumscheibe 3 und Säschar 4 eintreten kann, weitgehend vermieden wird.

In den Fig. 4 und 5 sind mögliche Arten der Beschichtung der Seitenfläche 8 des Säschares 4 dargestellt. Bereits die Beschichtung des vorderen Bereiches der Seite des Säschares bringt eine wesentliche Steigerung der Einsatzzeit, welche noch dadurch erhöht werden kann, dass die gesamte Seitenfläche 8 beschichtet wird. Hierdurch wird eine Ausdünnung des Materials im Bereich der Seitenfläche 8 vermieden. Eine weitere vorteilhafte Variante zeigt Fig. 7, wobei hier die Beschichtung über die Spitze bis auf die andere Seite reicht. Das Verschleißverhalten wird hierdurch bei begrenztem Mehraufwand weiter verbessert.

### Bezugszeichenliste

- 1: Rahmen
- 2: Säarm
- 3: Räumscheibe
- 4: Säschar
- 5: Särohr
- 6: Gelenk
- 7: Feder
- 8: Seitenfläche
- 9: Hartmetallbeschichtung

## Patentansprüche

1. Mulchsaatsäeinheit mit mindestens einem Säarm (2), an dem zumindest ein mit einem Säschar (4) versehenes Särohr (5) befestigt ist, das mit einer Räumscheibe (3) zusammenwirkt, wobei das Säschar (4) eine Hartmetallbeschichtung (9) aufweist,
**dadurch gekennzeichnet, dass**
die der Räumscheibe (3) gegenüberliegende Seite des Säschares (4) zumindest teilweise mit einer die Scharspitze bildenden Hartmetallbeschichtung (9) versehen ist.

2. Mulchsaatsäeinheit nach Anspruch 1, **dadurch gekennzeichnet, dass** der untere Bereich der Seite des Säschares (4) mit einer Hartmetallbeschichtung versehen ist.

3. Mulchsaatsäeinheit nach Anspruch 1, **dadurch gekennzeichnet, dass** die der Räumscheibe (3) gegenüberliegende Seite des Säschares (4) vollflächig mit einer Hartmetallbeschichtung (9) versehen ist.

4. Mulchsaatsäeinheit nach einem der Ansprüche 1 bis 3, **dadurch gekennzeichnet, dass** die Hartmetallbeschichtung (9) über die Seitenfläche (8) in Fahrtrichtung übersteht.

5. Mulchsaatsäeinheit nach einem der Ansprüche 1 bis 4, **dadurch gekennzeichnet, dass** die Hartmetallbeschichtung (9) bis auf die andere Seitenfläche (8) des Säschares (4) die Spitze übergreifend reicht.

6. Mulchsaatsäeinheit nach einem der Ansprüche 1 bis 5, **dadurch gekennzeichnet, dass** die Hartmetallbeschichtung (9) aus Wolframkarbid besteht.
